# EUROPÄISCHE PATENTSCHRIFT

(11) **EP 0 513 645 B1**
(45) Veröffentlichungstag und Bekanntmachung des Hinweises auf die Patenterteilung: **06.09.1995**
(21) Anmeldenummer: 92107615.4
(22) Anmeldetag: 06.05.1992
(51) Int. Cl.: C08G 77/34, C08G 77/46

(54) **Verfahren zum Desodorieren von SiC-gebundenen Polyetherpolysiloxanen**
Method for deodorizing polyether polysiloxanes having Si-C-bounds
Méthode de désodorisation de polyéther-polysiloxanes ayant des liaisons silicium-carbone

(30) Priorität: 18.05.1991 DE 4116419
(43) Veröffentlichungstag der Anmeldung: 19.11.1992
(73) Patentinhaber: Th. Goldschmidt AG, 45127 Essen (DE)
(72) Erfinder: Heinrich, Lothar, Dr., W-4300 Essen 16 (DE); Schator, Helmut, W-4300 Essen 1 (DE)

(56) Entgegenhaltungen:
- EP-A- 0 061 668
- EP-A- 0 398 684
- EP-A- 0 424 791
- DE-A- 1 520 441
- US-A- 4 515 979

## Beschreibung

Die Erfindung betrifft ein Verfahren zum Desodorieren von Polyoxyalkylen-Polysiloxan-Blockmischpolymerisaten, bei denen die Polysiloxanblöcke durch SiC-Bindungen an die Polyetherblöcke gebunden sind.

Polyoxyalkylen-Polysiloxan-Blockmischpolymerisate, bei denen die Polysiloxanblöcke durch SiC-Bindungen an die Polyetherblöcke gebunden sind, werden im allgemeinen technisch durch Anlagerung von Alkenpolyethern, insbesondere Allylpolyethern, an Wasserstoffsiloxan in Gegenwart von Platinkatalysatoren hergestellt.

Derartige Polyoxyalkylen-Polysiloxan-Blockmischpolymerisate können folgender allgemeiner Formel entsprechen 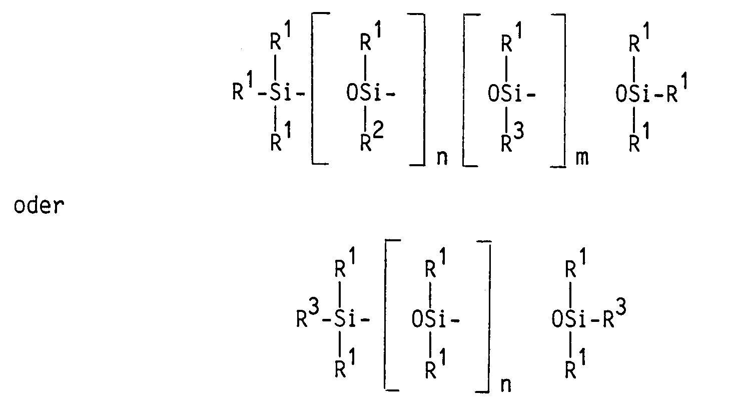
- R¹: = Alkylrest, im Regelfall Methylrest,
- R²: = Alkylrest mit 2 bis 20 Kohlenstoffatomen,
- R³: = (CH₂)₃O(C₂H₄O)ₓ(C₃H₆O)_{y}R⁴,
- R⁴: = Wasserstoff- oder Alkylrest mit 1 bis 4 Kohlenstoffatomen,
- n: = 0 bis 100,
- m: = 1 bis 8,
- x: = 1 bis 25,
- y: = 0 bis 25.

Dabei verwendet man einen Überschuß von Allylpolyethern, wobei unter den Bedingungen der Anlagerung ein Teil der Allylpolyether in die nicht anlagerungsfähigen Propenylpolyether umgelagert wird. Polyoxyalkylen-Polysiloxan-Blockmischpolymerisate der vorgenannten Art enthalten somit im allgemeinen Anteile an nicht umgesetzten Allylpolyethern und Propenylpolyethern.

Diese SiC-gebundenen Polyoxyalkylen-Polysiloxan-Blockmischpolymerisate werden bevorzugt als Stabilisatoren bei der Herstellung von Polyurethanschäumen, als Emulgatoren, Trennmittel und als Wirkstoffe in kosmetischen Produkten eingesetzt. Sie besitzen einen mehr oder weniger stark ausgeprägten unangenehmen, stechenden Geruch, der sich häufig bei der Lagerung noch verstärkt. Dieser Geruch stört bei der Verwendung der Blockmischpolymerisate und insbesondere bei ihrer Verwendung als Wirkstoffe in kosmetischen Produkten.

Man hat bereits versucht, die geruchsbildenden Komponenten durch Ausblasen mit Inertgas oder durch Wasserdampfbehandlung zu entfernen. Es hat sich jedoch gezeigt, daß der Geruch nach Lagerung der Blockmischpolymerisate bzw. nach Einarbeitung in kosmetische Formulierungen wieder auftritt.

Mit der Entfernung dieser Geruchskomponenten befaßt sich die EP-A-0 398 684. Dabei betrifft diese europäische Patentanmeldung ein gereinigtes Polyethersiloxan, welches in einem geschlossenen System während eines Zeitraumes von 24 Stunden mit 10⁻⁴n wäßriger Salzsäure in einer Menge von bis zu 1000 ppm, bezogen auf Polyether, bei 60°C behandelt worden ist. Das so gereinigte Produkt wird dann unter vermindertem Druck mit Wasserdampf behandelt, um die bei der Säurebehandlung gebildeten Aldehyde und Ketone zu entfernen.

Als nachteilig wurde jedoch gefunden, daß man zur Entfernung der gebildeten Aldehyde und Ketone, bezogen auf das Gewicht des behandelten Polyethersiloxans, die etwa 1 1/2fache Gewichtsmenge Wasserdampf benötigt. Man erhält deshalb dabei erhebliche Mengen eines übelriechenden, sauren Kondensats, welches schwierig zu entsorgen ist.

Ein weiterer Nachteil der Säurebehandlung besteht darin, daß, falls das Polyethersiloxan noch restliche SiH-Gruppen enthält, häufig die Bildung von Gelteilchen beobachtet wird. Diese Gelteilchen lassen sich durch Filtration nur schwierig entfernen.

Ein weiteres Verfahren zum Desodorieren von Polyoxyalkylen-Polysiloxan-Blockmischpolymerisaten kann der US-PS 4 515 979 entnommen werden. Nach diesem Verfahren gibt man zu dem Blockmischpolymerisat während oder nach seiner Herstellung Phytinsäure zu. Bei der Phytinsäure handelt es sich um einen Hexaphosphatester des Myoinosits der allgemeinen Formel C₆H₁₈O₂₄P₆. Diese Verbindung ist ein natürlich vorkommendes und ungiftiges Naturprodukt, welches in Körnern und Samen vorkommt. Für einen technischen Einsatz ist dieses Produkt nicht zuletzt seines hohen Preises wegen ungeeignet.

Die vorliegende Erfindung befaßt sich mit dem technischen Problem, ein Verfahren zum Desodorieren von Polyoxyalkylen-Polysiloxan-Blockmischpolymerisaten zu finden, welches in einfacher Weise technisch durchführbar ist und Produkte liefert, die frei von störenden Nebenprodukten sind. Dabei soll die Bildung schwer zu entsorgender Abfallprodukte möglichst vermieden oder zumindest eingeschränkt werden.

Gemäß der vorliegenden Erfindung gelingt dies dadurch, daß man auf die Blockmischpolymerisate Wasserstoff in Gegenwart an sich bekannter Hydrierungskatalysatoren bei Temperaturen von 20 bis 200°C und einem Druck von 1 bis 100 bar über einen Zeitraum von 0,5 bis 10 Stunden einwirken läßt.

Vorzugsweise läßt man den Wasserstoff auf die Blockmischpolymerisate bei Temperaturen von 110 bis 140°C und einem Druck von 2 bis 15 bar einwirken.

Als Katalysatoren können aus dem Stand der Technik bekannte übliche Hydrierungskatalysatoren, z.B. an sich bekannte Schwermetallkatalysatoren, verwendet werden. Besonders geeignet sind dabei Nickel, Kupfer, Chrom oder die Metalle der Platingruppe. Dabei können die Katalysatoren auf einem geeigneten Träger niedergeschlagen sein. Besonders bevorzugt sind wegen ihres relativ niedrigen Preises, ihrer hohen Reaktivität und ihrer hohen Standzeiten Nickelkatalysatoren.

Man verwendet im allgemeinen die Katalysatoren in einer Menge von 0,003 bis 1 Gew.-% Metall, bezogen auf Polyethersiloxan.

In einer bevorzugten Ausführungsform des erfindungsgemäßen Verfahrens setzt man dem Blockpolymerisat eine saure Tonerde und Wasser in Mengen von 0,1 bis 1,0 Gew.-% oder eine wäßrige Pufferlösung mit einem pH-Wert von 3 bis 6 zusätzlich zu.

Als saure Tonerde kann z.B. mit Säure aktivierte Bleicherde eingesetzt werden. Als Pufferlösungen können wäßrige Lösungen anorganischer und/oder organischer Säuren und Salze, die einen pH-Wert von 3 bis 6 besitzen, verwendet werden, wie z.B. ein Citronensäure-Phosphat-Puffer oder ein Citrat-Puffer nach Sörensen.

Nach erfolgter Einwirkung des Wasserstoffs auf die Polyoxyalkylen-Polysiloxan-Blockmischpolymerisate können die Katalysatoren in geeigneter Weise, z.B. durch Filtration oder Zentrifugieren, von den Polyoxyalkylen-Polysiloxan-Blockmischpolymerisaten abgetrennt werden.

Da die Polyoxyalkylen-Polysiloxan-Blockmischpolymerisate häufig Produkte mit einer höheren Viskosität sind, kann es zweckmäßig sein, die Hydrierung der Blockmischpolymerisate in Gegenwart geeigneter Lösungsmittel durchzuführen.

Die erfindungsgemäß behandelten Polyoxyalkylen-Polysiloxan-Blockmischpolymerisate sind frei von störenden Gerüchen und bleiben auch bei Lagerung oder nach Einarbeitung in kosmetische Formulierungen frei von den aus dem Stand der Technik bekannten unangenehmen und störenden Gerüchen.

Ein besonderer Vorteil des erfindungsgemäßen Verfahrens besteht darin, daß die behandelten Polyoxyalkylen-Polysiloxan-Blockmischpolymerisate und ihre Lösungen keine gelartigen Anteile enthalten. Die erfindungsgemäß behandelten Produkte bzw. ihre Lösungen sind klar, weitgehend farblos und frei von Trübungen.

Darüber hinaus hat sich überraschenderweise gezeigt, daß die stabilisierende Wirkung der erfindungsgemäß behandelten Blockmischpolymerisate bei der Herstellung von Polyurethanschäumen verbessert wird. Dies zeigt sich im allgemeinen in einer Erhöhung der Fließlänge der Polyurethanschäume und in einer Verminderung der Schaumstörungen.

Durch das erfindungsgemäße Verfahren gelingt es somit, von störenden Gerüchen freie und in ihren anwendungstechnischen Eigenschaften in überraschender Weise verbesserte Polyoxyalkylen-Polysiloxan-Blockmischpolymerisate herzustellen.

Das erfindungsgemäße Verfahren wird anhand der folgenden Beispiele noch näher erläutert.

Zur Hydrierung wird ein 1-l-Autoklav mit Begasungsrührer verwendet. Der Katalysator wird vom Polymer umhüllt, mit diesem in den Autoklaven gefüllt. Der Autoklav wird verschlossen und durch dreimaliges Evakuieren und Begasen mit Wasserstoff luftfrei gemacht. Nach dem Aufheizen auf die Hydriertemperatur wird der erforderliche Druck durch Zugabe von Wasserstoff eingestellt. Die Hydrierung erfolgt so, daß jeweils nach Druckabfall von 1 bar der Ausgangsdruck durch Wasserstoffaufdrücken wieder hergestellt wird. Nach Beendigung der Wasserstoffaufnahme wird der Autoklav entspannt und der Inhalt unter Inertgas filtriert.

### Beispiel 1

700 g eines Polyoxyalkylen-Polydimethylsiloxan-Blockmischpolymerisates mit 25 bis 30 Si-Atomen, 60 bis 70 Oxyethylen- und 10 bis 20 Oxypropylen-Einheiten und einem durchschnittlichen Mol-Gewicht von 6000, das 40 % Überschuß, bezogen auf das eingesetzte ≡SiH, an nicht addierten Polyoxyalkenen enthält, wird in Gegenwart von 1 g Nickelkatalysator mit 60 % Ni auf Kieselgur im Druckbereich 6/5 bar bei 120°C in 1 Stunde hydriert. Der Wasserstoffverbrauch beträgt 6,5 l unter Normalbedingungen. Nach dem Filtrieren bei 120°C in N₂-Atmosphäre wird ein farbloses, klares Produkt erhalten, das frei von dem unangenehmen stechenden Geruch ist. Dieser Geruch ist auch nach 10 Wochen nicht wieder feststellbar. Zusätzlich wird durch eine Schnellmethode auf nachträgliche Geruchsbildung geprüft, in dem 1 g hydriertes Polymerisat in 10 g Wasser mit Citronensäure auf pH 3 bis 4 angesäuert wird. Auch bei dieser Probe ist nach 1 Woche und auch nach 6 Wochen kein stechender Geruch nachweisbar.

### Beispiel 2

Bei einer wie im Beispiel 1 beschriebenen Hydrierung werden zusätzlich zum Nickelkatalysator dem Gemisch 1,4 g saure Tonerde (im Handel erhältlich unter der Bezeichnung Tonsil L 80 FF) und 3,5 g destilliertes Wasser zugesetzt. Der Wasserstoffverbrauch bleibt unverändert wie in Beispiel 1. Das entstehende Produkt hat die gleichen Eigenschaften. Die Hydrierzeit verkürzt sich auf 30 Minuten.

### Beispiel 3

Bei einer wie im Beispiel 1 beschriebenen Hydrierung werden zusätzlich zum Nickelkatalysator dem Gemisch 3,5 g eines Puffergemisches aus A: 1 Gew.-Teil m-H₃PO₄, 2 Gew.-Teilen n NaOH und 2 Gew.-Teilen Wasser und B: 21,0 g Citronensäure . H₂O auf 1 l Wasser im Mischungsverhältnis A : B = 22 : 78 mit einem pH-Wert von 3,4 zugesetzt. Der Wasserstoffverbrauch entspricht dem von Beispiel 1. Das Endprodukt hat die gleichen Eigenschaften. Die Hydrierzeit verkürzt sich auf 45 Minuten.

### Beispiel 4

700 g eines Polyoxyalkylen-Polydimethylsiloxan-Blockmischpolymerisates mit 40 bis 60 Si-Atomen, 90 bis 110 Oxyethylen- und 90 bis 110 Oxypropylen-Einheiten und einem durchschnittlichen Mol-Gewicht von 16000, das 40 % Überschuß an nicht addierten Polyoxyalkenen enthält, wird in Gegenwart von 0,5 g des im Beispiel 1 genannten Katalysators im Druckbereich 15/14 bar bei 140°C in 3 Stunden hydriert. Der Wasserstoffverbrauch beträgt 1 l unter Normalbedingungen. Nach dem Filtrieren unter den unter Beispiel 1 genannten Bedingungen, wird ein farbloses, klares Produkt ohne stechenden Geruch erhalten. Auch mit der Schnellmethode ist keine nachträgliche Geruchsentwicklung nachweisbar.

Mit dem hydrierten und nicht hydrierten Polymer wird je eine Polyurethan-Hartschaum-Herstellung durchgeführt. Dazu wird eine Rezeptur aus
100 Teilen Hartschaumpolyol mit einer OH-Zahl von 520
1,5 Teilen Wasser
2,0 Teilen Dimethylcyclohexylamin
1,0 Teilen erfindungsgemäß behandeltem bzw. zum Vergleich nicht behandeltem Blockmischpolymerisat als Stabilisator
40,0 Teilen Trichlorfluormethan
155,0 Teilen rohes Diphenylmethyldiisocyanat
hergestellt und in ein L-förmiges Rohr hinein verschäumt. Es wird die Fließlänge des Schaumes gemessen und verglichen.

Der Schaum mit dem hydrierten Stabilisator hatte eine um 8 % höhere Fließlänge. Die Porenstruktur wird visuell verglichen. Der Schaum mit dem hydrierten Stabilisator zeigt weniger Schaumstörungen.

### Beispiel 5

700 g eines Polyoxyalkylen-Polydimethylsiloxan-Blockmischpolymerisates mit 20 bis 30 Si-Atomen, 80 bis 120 Oxyethylen-Einheiten und einem durchschnittlichen Mol-Gewicht von 5000, das 35 % Überschuß an nicht addierten Polyoxyalkenen enthält, wird in Gegenwart von 0,5 g Nickelkatalysator mit 60 % Ni auf Kieselgur im Druckbereich 15/14 bar bei 130°C in 2 Stunden hydriert. Der Wasserstoffverbrauch beträgt 4,5 l unter Normalbedingungen. Wie in den Beispielen 1 und 2, wird innerhalb von 6 Wochen sowohl am hydrierten Produkt als auch nach der Schnellmethode keine Geruchsentwicklung beobachtet. Mit diesem Polymerisat wird wie bei Beispiel 2 eine vergleichende Polyurethan-Hartschaum-Herstellung durchgeführt. Durch die Hydrierung können die Werte des Schaumes, die beim Einsatz des unhydrierten Produktes außerhalb der Spezifikation liegen, auf das geforderte Maß gebracht werden.

## Patentansprüche

1. Verfahren zum Desodorieren von Polyoxyalkylen-Polysiloxan-Blockmischpolymerisaten, bei denen die Polysiloxanblöcke durch SiC-Bindungen an die Polyetherblöcke gebunden sind, dadurch gekennzeichnet, daß man auf die Blockmischpolymerisate Wasserstoff in Gegenwart an sich bekannter Hydrierungskatalysatoren bei Temperaturen von 20 bis 200°C und einem Druck von 1 bis 100 bar über einen Zeitraum von 0,5 bis 10 Stunden einwirken läßt.

2. Verfahren nach Anspruch 1, dadurch gekennzeichnet, daß man Wasserstoff bei Temperaturen von 110 bis 140°C einwirken läßt.

3. Verfahren nach Anspruch 1 oder 2, dadurch gekennzeichnet, daß man Wasserstoff bei einem Druck von 2 bis 15 bar einwirken läßt.

4. Verfahren nach einem oder mehreren der vorhergehenden Ansprüche, dadurch gekennzeichnet, daß man als Katalysatoren für Hydrierungsreaktionen an sich bekannte Schwermetallkatalysatoren verwendet.

5. Verfahren nach Anspruch 4, dadurch gekennzeichnet, daß man als Katalysatoren Ni, Cu, Cr oder Metalle der Platingruppe verwendet.

6. Verfahren nach einem oder mehreren der vorhergehenden Ansprüche, dadurch gekennzeichnet, daß man es in Gegenwart von 0,1 bis 1 Gew.-% einer sauren Tonerde und 0,1 bis 1 Gew.-% Wasser durchführt.

7. Verfahren nach einem oder mehreren der Ansprüche 1 bis 5, dadurch gekennzeichnet, daß man es in Gegenwart von 0,1 bis 1 Gew.-% einer wäßrigen Pufferlösung mit einem pH-Wert von 3 bis 6 durchführt.

## Claims

1. Process for deodorizing polyoxyalkylene-polysiloxane block copolymers in which the polysiloxane blocks are bound to the polyether blocks by means of SiC bonds, characterized in that hydrogen is allowed to act on the block copolymers in the presence of hydrogenation catalysts known per se at temperatures of from 20 to 200°C and a pressure of from 1 to 100 bar over a period of from 0.5 to 10 hours.

2. Process according to Claim 1, characterized in that hydrogen is allowed to act at temperatures of from 110 to 140°C.

3. Process according to Claim 1 or 2, characterized in that hydrogen is allowed to act at a pressure of from 2 to 15 bar.

4. Process according to one or more of the preceding claims, characterized in that the catalysts for hydrogenation reactions which are used are heavy metal catalysts known per se.

5. Process according to Claim 4, characterized in that the catalysts used are Ni, Cu, Cr or metals of the platinum group.

6. Process according to one or more of the preceding claims, characterized in that it is carried out in the presence of from 0.1 to 1% by weight of an acid alumina and from 0.1 to 1% by weight of water.

7. Process according to one or more of Claims 1 to 5, characterized in that it is carried out in the presence of from 0.1 to 1% by weight of an aqueous buffer solution having a pH of from 3 to 6.

## Revendications

1. Procédé de désodorisation de copolymères séquencés de polyoxyalkylène-polysiloxane dans lesquels les séquences de polysiloxane sont liées aux séquences de polyéther par des liaisons SiC, caractérisé on ce qu'on laisse agir de l'hydrogène sur les copolymères séquencés, en présence de catalyseurs d'hydrogénation connus en soi, à des températures de 20 à 200°C et à une pression de 1 à 100 bars, pendant une durée de 0,5 à 10 heures.

2. Procédé selon la revendication 1, caractérisé en ce qu'on laisse agir l'hydrogène à des températures de 110 à 140°C.

3. Procédé selon la revendication 1 ou 2, caractérisé en ce qu'on laisse agir l'hydrogène à une pression de 2 à 15 bars.

4. Procédé selon une ou plusieurs des revendications précédentes, caractérisé en ce qu'on utilise des catalyseurs connus en soi, du type métaux lourds, comme catalyseurs pour les réactions d'hydrogénation.

5. Procédé selon la revendication 4, caractérisé en ce qu'on utilise Ni, Cu, Cr ou des métaux du groupe du platine comme catalyseurs.

6. Procédé selon une ou plusieurs des revendications précédentes, caractérisé en ce qu'on le met en oeuvre en présence de 0,1 à 1 % en poids d'un oxyde d'aluminium acide et 0,1 à 1 % en poids d'eau.

7. Procédé selon une ou plusieurs des revendications 1 à 5, caractérisé en ce qu'on le met en oeuvre en présence de 0,1 à 1 % en poids d'une solution aqueuse tamponnée ayant une valeur de pH de 3 à 6.
